(19) Europäisches Patentamt
European Patent Office
Office européen des brevets

(11) **EP 3 762 276 B1**

(12) **EUROPÄISCHE PATENTSCHRIFT**

(45) Veröffentlichungstag und Bekanntmachung des Hinweises auf die Patenterteilung:
**29.06.2022   Patentblatt 2022/26**

(21) Anmeldenummer: **19708998.0**

(22) Anmeldetag: **28.02.2019**

(51) Internationale Patentklassifikation (IPC):
**B62D 7/16** *(2006.01)*       **F16J 3/04** *(2006.01)*

(52) Gemeinsame Patentklassifikation (CPC):
**B62D 7/163; F16C 11/0671;** F16C 2326/24

(86) Internationale Anmeldenummer:
**PCT/EP2019/054925**

(87) Internationale Veröffentlichungsnummer:
**WO 2019/170504 (12.09.2019 Gazette 2019/37)**

(54) **VERFAHREN ZUR MONTAGE EINER MANSCHETTE AN EINEM LENKGETRIEBE**

METHOD FOR MOUNTING A SLEEVE ON A STEERING GEAR

PROCÉDÉ DE MONTAGE D'UN MANCHON SUR UN MÉCANISME DE DIRECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.03.2018   DE 102018203412**

(43) Veröffentlichungstag der Anmeldung:
**13.01.2021   Patentblatt 2021/02**

(73) Patentinhaber:
• **thyssenkrupp Presta AG**
  **9492 Eschen (LI)**
• **thyssenkrupp AG**
  **45143 Essen (DE)**

(72) Erfinder:
• **MÜNSTER, Andreas**
  **88138 Weissensberg (DE)**
• **SCHÄDLER, Sebastian**
  **9497 Triesenberg (LI)**

(74) Vertreter: **thyssenkrupp Intellectual Property GmbH**
  **ThyssenKrupp Allee 1**
  **45143 Essen (DE)**

(56) Entgegenhaltungen:
**WO-A1-2005/085027     DE-U1- 8 807 327**

## Beschreibung

### Stand der Technik

Die Erfindung betrifft ein Verfahren zur Montage einer flexiblen Manschette an einem Lenkgetriebe, wobei das Lenkgetriebe einen in Richtung einer Längsachse axial vorstehenden Aufnahmezapfen aufweist, von dem eine Spurstange relativ zur Längsachse gelenkig vorsteht, und die Manschette einen flexiblen schlauchförmigen Faltenbalg umfasst, der getriebeseitig einen ringförmigen, koaxial zu einer Flanschachse ausgebildeten Verbindungsflansch und spurstangenseitig einen Dichtungsring aufweist, umfassend die Schritte:

- Bewegen des Verbindungsflansches zum Einführen der Spurstange,
- Greifen des Verbindungsflansches im Greifer eines Robotermanipulators,
- Annähern des Verbindungsflansches an den Aufnahmezapfen,
- Bewegen des Greifers zum Annähern des Verbindungsflansches an den Aufnahmezapfen
- Aufstecken des Verbindungsflansches auf den Aufnahmezapfen,
- Andrücken des Greifers in Richtung der Längsachse gegen den Aufnahmezapfen zum Aufstecken des Verbindungsflansches auf den Aufnahmezapfen bis zum Erreichen einer vordefinierten Endposition des Verbindungsflansches auf dem Aufnahmezapfen,
- Lösen des Greifers von der Manschette.

Das Lenkgetriebe eines Kraftfahrzeugs weist ein linear bewegbares Getriebeelement auf, beispielsweise eine Zahnstange, eine Gewindespindel, einen elektromechanischen oder hydraulischen Aktuator oder Kombinationen davon, welches im Folgenden gleichbedeutend als Schubstange, Zahnstange oder Gewindespindel bezeichnet wird. In Abhängigkeit von einem in das Lenkrad eingebrachten Lenkbefehl wird die Schubstange in Richtung ihrer Längsachse relativ zum fest mit der Karosserie verbundenen Lenkgetriebe bezüglich der Fahrtrichtung des Fahrzeugs nach rechts oder links bewegt.

Die Schubstange tritt jeweils rechts und links aus einem vom Getriebegehäuse des Lenkgetriebes in Richtung der Längsachse vorstehenden Aufnahmezapfen aus. Zur Übertragung der Lenkbewegung auf die Achsschenkel der lenkbaren Räder ist jeweils mit einem Ende der Schubstange über ein Gelenk, als Innengelenk bezeichnet, eine Spurstange verbunden. Das Innengelenk, welches in der Regel als Kugelgelenk ausgebildet ist, ermöglicht durch Verschwenken der Spurstange relativ zur Längsachse der Schubstange, die identisch ist mit der Längsachse des Aufnahmezapfens, einen Ausgleich von Relativbewegungen der Räder relativ zur Karosserie und damit zum Lenkgetriebe.

Zum Schutz gegen Eindringen von Verunreinigungen ist es bekannt, eine im Wesentlichen schlauchförmige Manschette aus flexiblem Material über die Spurstange aufzuziehen und am Aufnahmezapfen zu befestigen, in der Regel eine elastische Gummimanschette. Mit einem getriebeseitigen, dem Lenkgetriebe zugewandten Verbindungsflansch wird die Manschette auf den Aufnahmezapfen dichtend aufgesteckt und fixiert, und mit einem spurstangenseitigen Dichtring am lenkgetriebefernen Endbereich wird die Spurstange abdichtend umschlossen. Zwischen dem Verbindungsflansch und dem Dichtring erstreckt sich ein biegsamer, schlauchförmiger Faltenbalg, der das Innengelenk umschließt.

Zur Montage wird die Manschette auf die Spurstange aufgefädelt, wobei zunächst die Spurstange in den Verbindungsflansch eingeführt, dann der Faltenbalg über das Innengelenk aufgezogen wird, bis die Spurstange durch den Dichtring austritt, und der Verbindungsflansch mit seiner Öffnung auf dem Aufnahmezapfen aufgesteckt und fixiert wird.

Dadurch, dass die Manschette flexibel und in sich nicht formstabil ist, und die Spurstange undefiniert im Innengelenk abgewinkelt sein kann, treten unterschiedliche und nicht klar definierte Montagesituationen auf. Daher kann die Montage bisher nur manuell erfolgen, wobei handwerkliches Geschick erforderlich ist, um die Manschette auf die Spurstange aufzufädeln, ohne den Faltenbalg oder den Dichtungsring durch das freie Ende der Spurstange zu beschädigen, und anschließend den zumeist gummielastischen Verbindungsflansch formschlüssig auf den Aufnahmezapfen aufzustecken bzw. aufzupressen. Um die Montage zu erleichtern, ist aus der WO 2005/085027 A1 die Verwendung einer Montagehilfe in Form einer über die Spurstange gestülpten Hülle bekannt, welche Beschädigungen der Manschette beim Auffädeln vermeiden soll. Dieses Vorgehen erfordert jedoch zusätzlichen Arbeitsaufwand. Außerdem ist der Fertigungsaufwand durch die manuelle Montage hoch.

Eine automatisierte Fertigung zur Verringerung des Herstellungsaufwands ist mit den im Stand der Technik beschriebenen Verfahren nicht realisierbar.

Aus der DE 88 07 327 U1 ist ein Verfahren umfassend die eingangs genannten Schritte bekannt. Nachteilig daran ist, dass die Montage des Verbindungsflansches auf dem Aufnahmezapfen aufwendig ist.

Angesichts der vorangehend erläuterten Problematik ist es eine Aufgabe der vorliegenden Erfindung, ein vereinfachtes automatisiertes Verfahren zur Montage einer Manschette anzugeben.

### Darstellung der Erfindung

Diese Aufgabe wird erfindungsgemäß gelöst durch ein Verfahren mit den Merkmalen des Anspruchs 1. Vorteilhafte Weiterbildungen ergeben sich aus den Unteransprüchen.

Das erfindungsgemäße Verfahren umfasst ausgehend von dem eingangs genannten Verfahren die Schritte:

- Greifen des Faltenbalgs im Greifer eines Robotermanipulators,
- Bewegen des Greifers zum Einführen der Spurstange durch den Verbindungsflansch,
- Neigen des Greifers zum Neigen der Flanschachse um einen vorgegebenen Neigungswinkel relativ zur Längsachse,
- Detektieren des Anschlags des Verbindungsflansches am Aufnahmezapfen,
- Bewegen des Greifers zur Ausführung von taumelnden und/oder bogenförmigen und/oder translatorischen Montagebewegungen des Verbindungsflansches relativ zur Längsachse,
- kraftgeregeltes und/oder positionsgeregeltes Bewegen des Greifers in Richtung der Längsachse bis zum Erreichen einer vordefinierten Endposition des Verbindungsflansches auf dem Aufnahmezapfen.

Erfindungsgemäß erfolgt die Montage mittels eines Robotermanipulators, der einen mehrachsig im Raum positionierbaren Greifer aufweist. Der Greifer kann beispielsweise an einem mehrachsig bewegbaren Roboterarm angebracht sein, der im Stand der Technik bekannt ist, und entsprechend den erfindungsgemäß vorgesehenen Positionierungs- und Montagebewegungen des Greifers ausgestaltet ist.

Das Lenkgetriebe wird zunächst relativ zum Robotermanipulator positioniert, und eine zu montierende Manschette wird von dem Greifer aufgenommen, so dass ein gerader Durchgang durch den Verbindungsflansch, den Faltenbalg und den Dichtring frei ist.

Bevorzugt kann der Greifer so ausgestaltet sein, dass er die Manschette - bevorzugt am Faltenbalg und/oder am Verbindungsflansch - zumindest abschnittweise formstützend umgreift. Dadurch, dass der Greifer zur Außenform der Manschette zumindest teilweise komplementär ausgebildet ist, kann diese von dem Greifer umschlossen und durch die dabei außen anliegende Innenkontur des Greifers in eine definierte Montageform gezwungen werden. In dieser Montageform können der Verbindungsflansch, der Faltenbalg und bevorzugt auch der Dichtungsring koaxial zu einer gemeinsamen Achse, der Flanschachse des Verbindungsflansches, definiert ausgerichtet werden. Mit anderen Worten wird die an sich flexible Manschette im Greifer gestützt und formstabil ausgesteift, so dass sie trotz ihrer Flexibilität ähnlich wie ein starres Bauteil mittels des Robotermanipulators exakt positioniert und ausgerichtet werden kann. Dies ist vorteilhaft für eine automatisierte Handhabung der Manschette bei der Montage. Die Manschette weist von ihrer Flanschöffnung bis zum Beginn des Dichtungsrings einen ersten Abstand auf. Von der Flanschöffnung bis zum Beginn des Greifers beziehungsweise der einander gegenüberliegenden Greifer, also näher zu der Flanschöffnung, ist ein zweiter Abstand vorgesehen. Der zweite Abstand ist bevorzugt kleiner oder gleich einem Drittel des ersten Abstands, weiter bevorzugt ist der zweite Abstand kleiner oder gleich einem Viertel des ersten Abstands und weiter bevorzugt ist der zweite Abstand grösser einem Achtel des ersten Abstands. Weiterhin weist der Aufnahmezapfen einen Durchmesser auf. Bevorzugt liegt der zweite Abstand in einem Bereich zwischen -20% bis +20% von dem Durchmesser des Aufnahmezapfens.

Das formstützende Greifen kann dadurch erfolgen, dass der Greifer bewegliche Greifbacken aufweist, die in einem definierten Greifzustand, beispielsweise in geschlossenem Zustand, die Manschette zumindest abschnittweise formschlüssig umschließen, beispielsweise dadurch, dass zwischen den gegeneinander anliegenden Greifbacken ein die Manschette formschlüssig umgebender und abstützender Hohlraum gebildet wird. Es ist ebenfalls denkbar, den Greifer zusätzlich oder alternativ kraftgeregelt auszubilden, wobei die Greifkraft angepasst wird, so dass die flexible Manschette beim Greifen nicht undefiniert deformiert wird.

Im nächsten Schritt erfolgt das Auffädeln der Manschette durch Bewegen des Greifers zum Einführen der Spurstange durch den Verbindungsflansch. Dabei wird der Verbindungsflansch mit seiner getriebeseitigen Flanschöffnung vor dem freien Ende der Spurstange positioniert und auf diese zu bewegt. Dadurch wird die Manschette beginnend mit dem Verbindungsflansch auf die Spurstange aufgefädelt, wobei die Spurstange in das Innere der Manschette, d.h. in den Faltenbalg eintaucht. Die Manschette wird in Richtung der Flanschachse weiter auf der Spurstange entlang bewegt, so dass die Spurstange und das Innengelenk in den Faltenbalg eintauchen.

Vorzugsweise wird die Manschette weiter bewegt, bis die Spurstange mit ihrem freien Ende durch die Dichtungsöffnung des getriebefernen, spurstangenseitigen Dichtrings nach außen hindurchtritt. In diesem Zwischenzustand der Montage ist die Manschette vollständig auf die Spurstange aufgefädelt.

Durch Neigen des Greifers zum Neigen der Flanschachse um einen vorgegebenen Neigungswinkel relativ zur Längsachse wird die Manschette zusammen mit der darin aufgenommenen Spurstange relativ zur Längsachse des Aufnahmezapfens geneigt. Die Neigung erfolgt um eine quer durch die Längsachse, bevorzugt durch das Innengelenk gehende Neigungsachse, wobei die Spurstange im Innengelenk relativ zur Schubstange - Zahnstange oder Gewindespindel - abgewinkelt werden kann. In diesem Montagezustand steht der Verbindungsflansch in einem Neigungswinkel schräg zum Aufnahmezapfen. Bevorzugt kann die Flanschachse in spitzem Winkel zur Längsachse stehen.

Anschließend oder auch kombiniert mit dem Neigen erfolgt das Annähern des Verbindungsflansches an den Aufnahmezapfen durch Bewegen des Greifers. Bevorzugt wird der Greifer entlang der Längsachse auf den Aufnahmezapfen zu bewegt, wobei die Längsachse entsprechend der Neigung schräg durch die Flanschöffnung des Verbindungsflansches verläuft.

Die Annäherung wird fortgesetzt bis zum Detektieren des Anschlags des Verbindungsflansches am Aufnahmezapfen. Durch die Neigung kommt der Verbindungsflansch mit einem bezüglich der Längsachse getriebeseitig schräg vorstehenden Umfangsabschnitt in mechanischen Kontakt mit der Montageebene auf der axialen Stirnseite des Aufnahmezapfens.

Der mechanische Anschlag kann dadurch detektiert werden, dass der Greifer von dem Robotermanipulator kraftgeregelt bewegt wird. Dabei wird während der Bewegung mittels Kraftsensoren am Greifer oder am Robotermanipulator eine auf den Greifer entgegen der Bewegungsrichtung einwirkende Kraft, die Gegenkraft, gemessen, wobei ein steiler Kraftanstieg das Auftreffen auf ein Hindernis signalisiert, vorliegend der Kontakt der in dem Greifer gehaltenen Manschette auf das Getriebegehäuse des Lenkgetriebes.

Die Bewegung des Greifers kann wie beschrieben kraftgeregelt, und zusätzlich positionsgeregelt erfolgen. Dadurch kann eine Plausibilitätsprüfung erfolgen, ob beispielsweise das Lenkgetriebe zur Montage korrekt positioniert ist, und sich der Greifer innerhalb eines zulässigen Montagebereichs befindet.

Die definierte Neigung der Manschette und Ausrichtung vor dem Aufnahmezapfen ist durch das erfindungsgemäße Greifen der Manschette im Greifer insbesondere dadurch realisierbar, dass, wie oben beschrieben, die Manschette dabei formstützend umgriffen wird.

Durch Bewegen des Greifers zur Ausführung von taumelnden und/oder translatorischen und/oder bogenförmigen Montagebewegungen wird der Verbindungsflansch relativ zum Aufnahmezapfen quer und/oder schräg zur Längsachse bewegt. Bei der Taumelbewegung kreist die geneigte Flanschachse auf einer zumindest abschnittweise kegelmantelförmigen Umlauffläche relativ zur Längsachse, wobei die durch die Längsachse und die Flanschachse aufgespannte Ebene um die Längsachse rotiert, aber keine Rotation der Manschette um die Flanschachse erfolgt, so dass jeweils unterschiedliche Umfangsbereiche des Verbindungsflansches kreisend in Kontakt mit dem Aufnahmezapfen kommen. Die Taumelbewegung kann überlagert werden mit einer translatorischen oder bogenförmigen Montagebewegung der Flanschachse quer zur Längsachse. Beispielsweise kann der Verbindungsflansch eine Bewegungsbahn entlang einer Lissajous-Figur ausführen, die durch Überlagerung von Sinusbewegungen zustande kommt und effizient eine große Vielzahl von Relativpositionen zwischen Verbindungsflansch und Aufnahmezapfen quer zur Längsachse durchläuft.

Es ist möglich, dass die vorgenannten Taumelbewegungen und/oder Bogenbewegungen und/oder Translationsbewegungen des Verbindungsflansches nach dem Detektieren des Anschlags einsetzen, oder auch bereits während des Annäherns vor dem Kontakt ausgeführt werden, bevor der Anschlag erfolgt.

Während der vorgenannten Montagebewegung erfolgt erfindungsgemäß ein kraftgeregeltes und/oder positionsgeregeltes Andrücken des Greifers in Richtung der Längsachse gegen den Aufnahmezapfen zum Aufstecken des Verbindungsflansches auf den Aufnahmezapfen bis zum Erreichen einer vordefinierten Endposition des Verbindungsflansches auf dem Aufnahmezapfen. Beim Durchlaufen der Montagebewegung nimmt der Verbindungsflansch zum Aufnahmezapfen eine Vielzahl unterschiedlicher Relativpositionen ein und wird dabei gleichzeitig gegen den Aufnahmezapfen angedrückt. Sobald dabei eine zum Aufstecken geeignete Relativposition passiert wird, sorgt die ausgeübte Andruckkraft dafür, dass die Flanschöffnung des Verbindungsflansches stirnseitig auf den Aufnahmezapfen aufgezwängt wird, mit anderen Worten der Aufnahmezapfen in die Flanschöffnung eintritt.

Das Aufzwängen des Verbindungsflansches auf den Aufnahmezapfen kann durch eine kurzzeitige Verringerung der auf den Greifer wirkenden, der ausgeübten Andruckkraft entgegengesetzt wirkenden Gegenkraft, die von dem Greifer oder dem Robotermanipulator zur Kraftregelung gemessen wird, detektiert werden. Die Montagebewegung kann dann in vollem Umfang oder teilweise weiter durchgeführt werden, beispielsweise als reine Taumelbewegung um die Längsachse, oder auch völlig abgeschaltet werden, nach Ausrichtung des Verbindungsflansches koaxial zur Längsachse.

Von der Position beim Aufzwängen ausgehend kann der Verbindungsflansch in Richtung der Längsachse weiter auf den Aufnahmezapfen aufgesteckt werden, beispielsweise positionsgeregelt um eine vorgegebene Strecke in Richtung der Längsachse bewegt werden, so dass eine in der Flanschöffnung ausgebildete innere Sitzfläche in Fixierungsposition auf einer am Aufnahmezapfen ausgebildeten äußeren Sitzfläche in der geforderten Endposition positioniert werden kann.

Nach Erreichen der vorgegebenen Endposition erfolgt das Lösen des Greifers von der Manschette. Zur Freigabe der Manschette werden beispielsweise Greifbacken des Greifers auseinander bewegt, so dass der Greifer von der fertig montierten Manschette entfernt werden kann.

In der Praxis kann die Manschette, wie dies an sich bekannt ist, aus einem elastischen Material wie Gummi oder dergleichen bestehen. Zur Montage auf dem Aufnahmezapfen kann die Flanschöffnung des Montageflansches elastisch aufgeweitet werden, was insbesondere durch die um den Verbindungsflansch umlaufenden Walk- und Stauchverformungen erreicht werden kann, die beim Andrücken durch die Taumelkomponente der Montagebewegung erzeugt werden. Der Verbindungsflansch wird unter kontinuierlich umlaufender Verformung auf den Aufnahmezapfen aufgeschoben, wodurch lokale Kraftspitzen im Material des Montageflansches und Beschädigungen der Manschette bei der Montage weitgehend vermieden werden. In montiertem Zustand sitzt der Verbindungsflansch gleichmäßig radial elastisch auf dem Aufnahmezapfen verspannt.

Eine Weiterbildung des Verfahrens sieht vor, dass beim Einführen der Spurstange bei einem detektierten Anschlag der Spurstange mit dem Dichtungsring eine Suchbewegung quer zur Richtung der Einführung durchgeführt wird zum Einfädeln der Spurstange in den Dichtungsring. Beim Bewegen des Greifers zum Annähern des Verbindungsflansches an den Aufnahmezapfen muss sichergestellt sein, dass die Manschette vollständig auf der Spurstange aufgefädelt ist, also durch den Dichtungsring nach außen durchgeht. Dadurch, dass bei der Montage die relative Winkelposition der Spurstange im Innengelenk nicht definiert ist, kann die Spurstange relativ zur Durchgangsöffnung des Dichtrings geringfügig fehlorientiert sein, so dass die Gefahr besteht, dass das freie Ende der Spurstange beim Aufziehen der Manschette von innen gegen den Faltenbalg oder den Dichtring anschlägt und verhakt, und die Spurstange nicht durch den Dichtring hindurchtritt oder der Faltenbalg oder der Dichtring beschädigt wird. Dadurch, dass - bevorzugt durch Überwachung der auf den Greifer wirkenden Kraft beim Einführen der Spurstange - detektiert wird, wenn die Spurstange innerhalb der Manschette anschlägt, kann erfindungsgemäß eine Suchbewegung eingeleitet werden, bei welcher der Greifer die Manschette samt Dichtring quer zur Flanschachse verlagert, bevorzugt in einer oszillierenden Bewegung. Sobald es im Verlauf der Suchbewegung zu einer Übereinstimmung des offenen Öffnungsquerschnitts mit dem Querschnitt der Spurstange kommt, kann die Spurstange nach außen hindurchtreten, und die Manschette ist vollständig aufgefädelt. Die Suchbewegung kann lineare, bogenförmige oder kreisende Bewegungskomponenten des Dichtrings quer zur Flanschachse umfassen.

Alternativ zum Einschalten der Suchbewegung bei einem detektierten Anschlag der Spurstange mit dem Dichtungsring ist es denkbar und möglich, die oszillierende Suchbewegung bereits vorher einzuschalten und auszuführen, noch bevor der Anschlag der Spurstange am Dichtungsring erfolgt. Die Annäherungsbewegung kann dann gleichzeitig mit der Suchbewegung erfolgen.

Das Detektieren des Anschlags des Verbindungsflansches am Aufnahmezapfen und des Anschlags des Dichtungsrings am Aufnahmezapfen kann vorzugsweise durch einen Kraft-sensor für die kraftgeregelte Bewegung des Greifers erfolgen. Der Anschlag wird durch einen kurzfristigen steilen Anstieg der Gegenkraft erfasst, das Eintreten des Aufnahmezapfens oder das Hindurchtreten der Spurstange durch einen Abfall der Gegenkraft. Der Fall, dass sich der Achszapfen oder die Spurstange verkanten und nicht eingefädelt werden können, ist dadurch erkennbar, dass die Gegenkraft nicht abfällt. Dann kann eine Notabschaltung des Robotermanipulators eingeleitet werden, oder eine Wiederholung der Montage.

Vorzugsweise ist der Verbindungsflansch als hohlzylindrischer Ring ausgebildet, wobei eine innere zylindrische Mantelfläche die innere Sitzfläche bildet. Korrespondierend dazu kann der Aufnahmezapfen außen ebenfalls zylindrisch ausgebildet sein, wobei die äußere Sitzfläche auf dessen äußerer Mantelfläche ausgebildet ist.

Es kann weiter vorgesehen sein, dass der Verbindungsflansch und der Aufnahmezapfen korrespondierende, formschlüssig ineinander greifende Sitzelemente aufweisen. Wenn der Verbindungsflansch in Endposition auf dem Aufnahmezapfen sitzt, können die Sitzelemente einen in Richtung der Längsachse wirksamen Formschluss ausbilden. Am Aufnahmezapfen kann das Formschlusselement beispielsweise eine auf der ansonsten zylindrischen Sitzfläche umlaufende, radial vorstehende Rippe mit eckigem oder gerundetem Querschnitt aufweisen, welche in eine korrespondierende, innen in der Sitzfläche des Verbindungsflansches ausgebildete, umlaufende Nut formschlüssig eingreift. Zur erfindungsgemäßen Montage eines gummielastischen Verbindungsflansches wird dieser über den Aufnahmezapfen aufgeschoben und dabei beim Übergang durch die Rippe zunächst radial aufgeweitet, bis diese in die Nut einschnappt. Dieses kann anhand der auf den Greifer wirkenden Gegenkraft detektiert werden, die beim Einschnappen kurz abfällt und durch die danach in Längsrichtung wirksame Formschlussverbindung steil ansteigt.

Der Dichtring kann hinsichtlich Form und Abmessungen an die Spurstange angepasst sein, auf deren Außenfläche er abdichtend angebracht ist. Beispielsweise kann er als hohlzylindrischer Ring, oder als O-Ring mit gerundetem Profil ausgebildet sein. Der Durchgangsquerschnitt der Durchgangsöffnung wird bevorzugt so bemessen, dass der Dichtring elastisch dichtend auf der Spurstange anliegt, wobei eine Verschiebbarkeit längs auf der Spurstange möglich sein kann, um Ausgleichsbewegungen zuzulassen.

Der Faltenbalg erstreckt sich schlauch- oder röhrenartig zwischen dem Verbindungsflansch und dem Dichtungsring, und ist bevorzugt einstückig mit dem Verbindungsflansch und dem Dichtring ausgebildet, beispielsweise als elastisches Gummi-Formteil. Der Faltenbalg kann in an sich bekannter Weise mindestens eine in Umfangsrichtung umlaufende Balgfalte aufweisen, bevorzugt mehrere in Längsrichtung aufeinander folgende. Zum oben beschriebenen formstützenden Greifen kann der Greifer komplementär ausgebildet sein, und eine mit den Balgfalten zumindest teilweise formschlüssig in Eingriff bringbare Innenkontur aufweisen. Dadurch kann eine definierte Positionierung der Manschette im Greifer längs und quer zur Flanschachse erleichtert werden.

## Beschreibung der Zeichnungen

Vorteilhafte Ausführungsformen der Erfindung werden im Folgenden anhand der Zeichnungen näher erläutert. Im Einzelnen zeigen:

Figur 1     eine Kraftfahrzeug-Lenkung in einer teilweisen, schematischen perspektivischen Darstellung,

Figur 2    eine schematische, teilweise aufgeschnittene Darstellung des Lenkgetriebes aus Figur 1 im Bereich einer Manschette,

Figur 3    ein erster Montagezustand bei der Durchführung des erfindungsgemäßen Verfahrens,

Figur 4    ein zweiter Montagezustand bei der Durchführung des erfindungsgemäßen Verfahrens,

Figur 5    ein dritter Montagezustand bei der Durchführung des erfindungsgemäßen Verfahrens,

Figur 6    eine schematische Koordinatendarstellung einer Bewegungsbahn.

**Ausführungsformen der Erfindung**

In den verschiedenen Figuren sind gleiche Teile stets mit den gleichen Bezugszeichen versehen und werden daher in der Regel auch jeweils nur einmal benannt bzw. erwähnt.

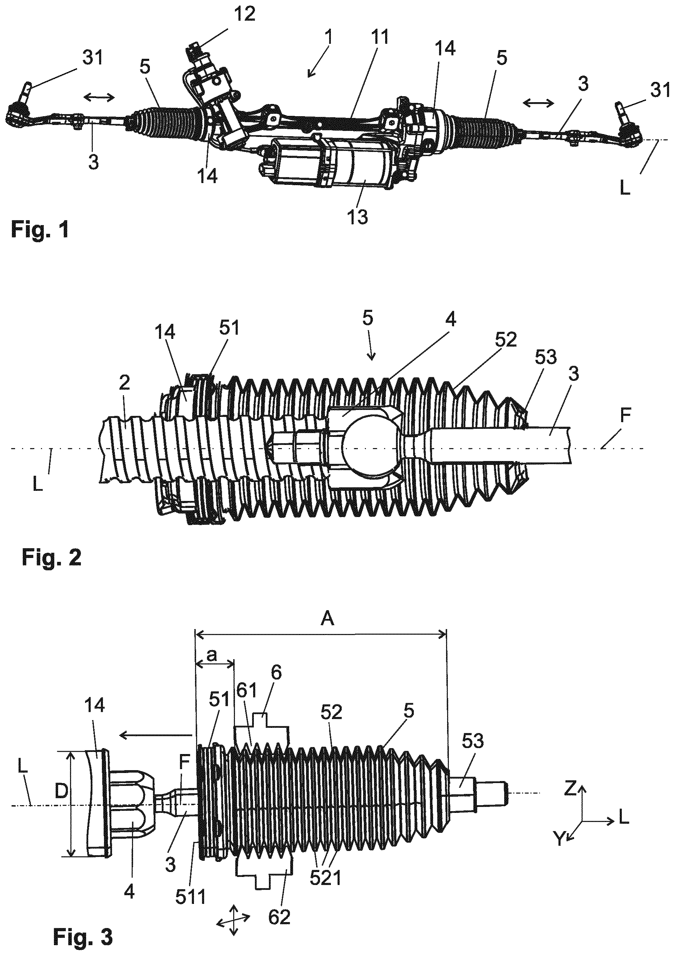

Figur 1 zeigt einen Teil einer Kraftfahrzeug-Lenkung, umfassend ein Lenkgetriebe 1, welches ein Getriebegehäuse 11 umfasst, welches im Kraftfahrzeug mit einer nicht dargestellten Karosserie verbunden wird. An eine Eingangswelle 12 kann eine nicht dargestellte Lenkwelle angeschlossen werden, die mit einem Lenkrad zur Eingabe manueller Lenkbefehle verbunden sein kann.

Beispielhaft ist eine hilfskraftunterstützte Lenkung dargestellt, bei zur Unterstützung des in die Eingangswelle 12 eingegebenen manuellen Lenkmoments ein Hilfskraftantrieb 13 mit dem Lenkgetriebe 1 verbunden ist. Der Hilfskraftantrieb 13 umfasst bevorzugt einen Elektromotor zur Einkopplung einer motorischen Hilfskraft in eine Schubstange 2.

Eine manuelle Drehung der Eingangswelle 12 und auch eine Einleitung eines Lenk-Hilfsmoments durch den Hilfskraftantrieb 13 wird in dem Lenkgetriebe 1 umgesetzt in eine translatorische Bewegung der Schubstange 2, die sich in Richtung einer Längsachse L quer zur Fahrtrichtung des Fahrzeugs erstreckt und an der an jedem Ende jeweils eine Spurstange 3 über ein als Kugelgelenk ausgebildetes Innengelenk 4 angelenkt ist, wie Figur 2 entnehmbar ist.

Die Schubstange 2, die in Figur 1 von dem Getriebegehäuse 11 verdeckt ist, ist beiderseits - in Figur 1 rechts und links - jeweils durch einen Aufnahmezapfen 14 aus dem Getriebegehäuse 11 herausgeführt, wie in Figur 2 erkennbar ist.

Eine Drehung der Eingangswelle 12 und eine Lenkunterstützung durch den Hilfskraftantrieb 13 wird in dem Lenkgetriebe 1 umgesetzt in eine translatorische Bewegung der Schubstange 2 entlang der Längsachse L nach rechts oder links, die über die beiden Spurstangen 3, wie in Figur 1 mit Doppelpfeilen angedeutet, auf die Achsschenkel 31 zum Einschlagen der nicht dargestellten gelenkten Räder des Fahrzeugs übertragen.

Die Schubstange 2 kann als Getriebelement eine Zahnstange umfassen, welches in an sich bekannter Weise mit einem an der Eingangswelle 12 angebrachten Lenkritzel kämmt, und/oder eine Gewindespindel - wie in Figur 2 beispielhaft dargestellt - wenn der Hilfskraftantrieb 13 einen Spindeltrieb mit einer motorisch drehbar antreibbaren Spindelmutter aufweist, in welche die Gewindespindel 2 eingreift.

Bei einer rein manuellen Lenkung kann der Hilfskraftantrieb 13 wegfallen. Bei einer rein motorischen Lenkung ohne direkten manuellen Lenkeingriff, beispielsweise in einem sogenannten Steer-by-Wire-Lenksystem ohne direkte mechanische Kopplung des Lenkrads mit dem Lenkgetrieb 1, kann die Eingangswelle 12 wegfallen, und der Lenkeinschlag erfolgt ausschließlich durch bevorzugt elektrische Ansteuerung des Hilfskraftantriebs 13.

Auf jedem der beiden Aufnahmezapfen 14 ist eine Manschette 5 angebracht, die bevorzugt als flexibles, elastisches Gummi-Formteil ausgebildet ist. Die Manschette 5 weist einen Verbindungsflansch 51 mit einer Flanschachse F auf, der getriebeseitig an einem Faltenbalg 52 einstückig ausgebildet ist, an dessen getriebefernen, spurstangenseitigen Ende ein Dichtungsring 53 angebracht ist, der ebenfalls einstückig mit dem Faltenbalg 52 ausgebildet ist. Der Faltenbalg 52 weist vorzugsweise eine Mehrzahl von umlaufenden Balgfalten 521 auf. Der Verbindungsflansch 51 ist ringförmig mit einer zur Flanschachse F koaxialen, kreisrunden Flanschöffnung 511 ausgebildet.

Im montierten Zustand gemäß Figur 2 ist der Verbindungsflansch 52 mit seiner Flanschöffnung 511 auf dem Aufnahmezapfen 14 aufgesteckt. Dabei ist die Längsachse L deckungsgleich mit der Flanschachse F. Die Manschette 5 weist von ihrer Flanschöffnung 511 bis zum Beginn des Dichtungsrings 53 einen ersten Abstand A auf. Von der Flanschöffnung 511 bis zum Beginn des Greifers 6 beziehungsweise der einander gegenüberliegenden Greifer, also näher zu der Flanschöffnung 511 hin, ist ein zweiter Abstand a vorgesehen. Der zweite Abstand a ist bevorzugt kleiner oder gleich $\frac{1}{3}$ dem ersten Abstand A, weiter bevorzugt ist der zweite Abstand kleiner oder gleich $\frac{1}{4}$ dem ersten Abstand A und weiter bevorzugt ist der zweite Abstand a grösser $\frac{1}{8}$ dem ersten Abstand A. Weiterhin weist der Aufnahmezapfen 14 einen Durchmesser D auf. Bevorzugt liegt der zweite Abstand a in einem Bereich zwischen - 20% bis +20% dem Durchmesser D des Aufnahmezapfens 14.

Figur 3 zeigt einen ersten Montagezustand bei der Durchführung des erfindungsgemäßen Verfahrens. Dabei umgreift ein Greifer 6 zwischen seinen Greifbacken 61 und 62 den Faltenbalg 52 formstützend. Hierzu sind die Greifbacken 61 und 62 innen komplementär zu den Balgfalten 521 ausgeformt, so dass die Manschette 6 formschlüssig und sowohl längs als auch quer zur Flanschachse F räumlich definiert im Greifer 6 ausgerichtet ist.

In Figur 3 ist der Verbindungsflansch 52 auf die Spurstange 3 teilweise aufgefädelt, wobei die Spurstange 3 durch die Flanschöffnung 511 in den Faltenbalg 52 eintaucht, aber noch nicht wieder durch den Dichtungsring 53 austritt. Um die Manschette 5 vollständig auf die Spurstange 3 aufzufädeln, wird der Greifer 6 in eine oszillierende Suchbewegung quer zur Flanschachse F gebracht, also beispielsweise in der Zeichnungsebene nach oben und unten, und zusätzlich oder alternativ aus der Zeichnungsebene heraus oder in diese hinein, wie mit den gekreuzten Pfeilen angedeutet, mit anderen Worten in y- und/oder z-Richtung, die senkrecht zur Richtung der Längsachse L stehen.

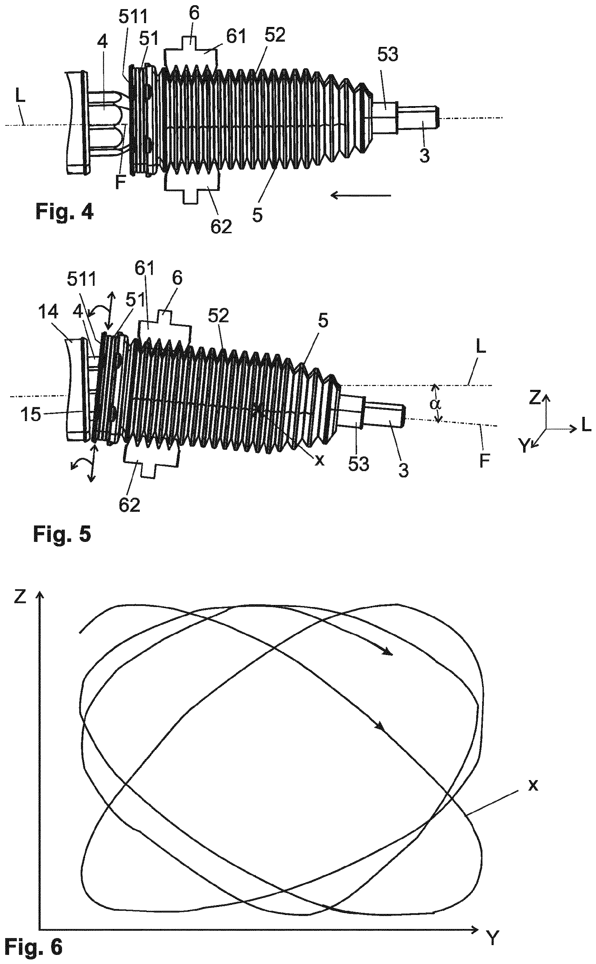

Dadurch, dass der Greifer 6 auf den Aufnahmezapfen 14 zu bewegt wird, wird der Dichtungsring 53 auf das freie Ende der Spurstange 3 zu bewegt. Wenn der Querschnitt der Spurstange 3 mit dem Öffnungsquerschnitt des Dichtungsrings 53 deckungsgleich ist, tritt die Spurstange 3 durch den Dichtungsring 53 hindurch, so dass der in Figur 4 gezeigte Montagezustand erreicht ist, in dem die Manschette 5 vollständig auf die Spurstange 3 aufgefädelt ist. Sollte das Ende der Spurstange 3 von innen an dem Dichtring 53 oder dem Faltenbalg 52 anschlagen oder verhaken, wird sie durch die oszillierende Suchbewegung gelöst, und, sobald es im Verlauf der Suchbewegung zu einer Übereinstimmung des offenen Öffnungsquerschnitts des Dichtungsrings 53 mit dem Querschnitt der Spurstange 3 kommt, nach außen - in Figur 3 nach rechts - hindurchtreten, und die Manschette 5 ist vollständig aufgefädelt. Die Suchbewegung kann dabei lineare, bogenförmige oder kreisende Bewegungskomponenten des Dichtrings 53 quer zur Flanschachse F umfassen.

Aus der Montageposition von Figur 4 wird der Greifer 6 geneigt, so dass die Flanschachse F um einen vorgegebenen Neigungswinkel $\alpha$ (alpha) relativ zur Längsachse L geneigt ist, wie in Figur 5 dargestellt. Dabei ist die Manschette 5 zusammen mit der darin aufgenommenen Spurstange 3 relativ zur Längsachse L des Aufnahmezapfens 14 geneigt. Die Neigung erfolgt um eine quer durch die Längsachse L, bevorzugt durch das Innengelenk 4 gehende Neigungsachse, wobei die Spurstange 3 im Innengelenk 14 relativ zur Schubstange 2 - Zahnstange oder Gewindespindel - abgewinkelt sein kann. In diesem Montagezustand steht der Verbindungsflansch 51 in dem Neigungswinkel $\alpha$ (alpha) schräg zum Aufnahmezapfen 14. Bevorzugt kann die Flanschachse F in einem spitzem Neigungswinkel $\alpha$ (alpha) zur Längsachse L stehen.

Aus der Montageposition von Figur 4 kann die Manschette 4 zunächst geneigt, und dann durch Bewegen des Greifers 6 an den Aufnahmezapfen 14 erfolgen, bis der Verbindungsflansch 51 schräg an dem Aufnahmezapfen 14 anschlägt, wie in Figur 5 dargestellt. Alternativ kann das Annähern zuerst erfolgen, und dann das Neigen, oder auch in einer kombinierten Bewegung, bis die in Figur 5 gezeigte Position erreicht ist.

Der Anschlag kann detektiert werden durch eine kraftgeregelte Bewegung des Greifers 6, wobei ständig überwacht wird, welche Gegenkraft auf den Greifer 6 wirkt. Diese steigt steil an, wenn die Manschette 5 an dem Aufnahmezapfen 14 anschlägt.

Anschließend, oder bereits während der Annäherung vor dem Anschlag wird die Manschette 5 von dem Greifer 6 in eine taumelnde und/oder translatorische und/oder bogenförmige Montagebewegung um die Längsachse L gebracht. Dabei kann ein Punkt X auf der Flanschachse F, der wie in Figur 5 dargestellt radialen Abstand bezüglich der Längsachse L hat, beispielsweise in einer y-z-Ebene, die senkrecht zur Längsachse L steht, eine Bewegungsbahn ähnlich einer Lissajous-Figur durchlaufen, wie in Figur 6 in einer schematischen Ansicht in einer Ebene quer zur Längsachse L gezeigt ist.

Während der vorgenannten Montagebewegung erfolgt erfindungsgemäß ein kraftgeregeltes und/oder positionsgeregeltes Andrücken des Greifers 6 in Richtung der Längsachse L gegen den Aufnahmezapfen 14 zum Aufstecken des Verbindungsflansches 51 auf den Aufnahmezapfen 51 bis zum Erreichen der in Figur 2 gezeigten Endposition des Verbindungsflansches 51 auf dem Aufnahmezapfen 14. Beim Durchlaufen der Montagebewegung nimmt der Verbindungsflansch 51 relativ zum Aufnahmezapfen 14 eine Vielzahl unterschiedlicher Relativpositionen ein und wird dabei gleichzeitig gegen den Aufnahmezapfen 14 angedrückt. Sobald dabei eine zum Aufstecken geeignete Relativposition passiert wird, sorgt die ausgeübte Andruckkraft dafür, dass die Flanschöffnung 511 des Verbindungsflansches 51 stirnseitig auf den Aufnahmezapfen 14 aufgezwängt wird, mit anderen Worten der Aufnahmezapfen 14 in die Flanschöffnung 511 eintritt.

Das Aufzwängen des Verbindungsflansches 51 auf den Aufnahmezapfen 14 kann durch eine kurzzeitige Verringerung der auf den Greifer 6 wirkenden, der ausgeübten Andruckkraft entgegengesetzt wirkenden Gegenkraft, die von dem Greifer 6 oder dem Robotermanipulator zur Kraftregelung gemessen wird, detektiert werden. Die Montagebewegung kann dann in vollem Umfang oder teilweise weiter durchgeführt werden, beispielsweise als reine Taumelbewegung um die Längsachse L, oder auch völlig abgeschaltet werden, nach einer Ausrichtung des Verbindungsflansches 51 koaxial zur Längsachse L.

Von der Position beim Aufzwängen ausgehend kann der Verbindungsflansch 51 in Richtung der Längsachse L weiter auf den Aufnahmezapfen 14 aufgesteckt werden, beispielsweise positionsgeregelt um eine vorgegebene Strecke in Richtung der Längsachse L, so dass eine in der Flanschöffnung 511 ausgebildete innere Sitzfläche in Fixierungsposition auf einer am Aufnahmezapfen 14 ausgebildeten äußeren Sitzfläche in der geforderten Endposition positioniert werden kann.

In der Endposition kann ein auf der zylindrischen Sitzfläche des Aufnahmezapfens 14 umlaufendes Formschlusselement 15, welches im Beispiel als radial vorstehende Rippe ausgebildet ist, in eine korrespondierende, umlaufende Nut innen im Verbindungsflansch 51 einrasten zur Bildung eines in Richtung der Längsachse L wirksamen Formschlusses.

Nach Erreichen der vorgegebenen Endposition erfolgt das Lösen des Greifers 6 von der Manschette 5. Zur Freigabe der Manschette 5 werden beispielsweise Greifbacken 61 und 62 des Greifers 6 auseinander bewegt, so dass der Greifer 6 von der fertig montierten Manschette 5 entfernt werden kann.

**Bezugszeichenliste**

| | |
|---|---|
| 1 | Lenkgetriebe |
| 11 | Getriebegehäuse |
| 12 | Eingangswelle |
| 13 | Hilfskraftantrieb |
| 14 | Aufnahmezapfen |
| 15 | Formschlusselement |
| 2 | Schubstange |
| 3 | Spurstange |
| 31 | Achsschenkel |
| 4 | Innengelenk |
| 5 | Manschette |
| 51 | Verbindungsflansch |
| 511 | Flanschöffnung |
| 52 | Faltenbalg |
| 521 | Balgfalte |
| 53 | Dichtungsring |
| 6 | Greifer |
| 61,62 | Greifbacken |
| | |
| F | Flanschachse |
| L | Längsachse |
| A | erster Abstand |
| a | zweiter Abstand |
| D | Durchmesser des Aufnahmezapfens 14 |

**Patentansprüche**

1. Verfahren zur Montage einer flexiblen Manschette (5) an einem Lenkgetriebe (1), wobei das Lenkgetriebe (1) einen in Richtung einer Längsachse (L) axial vorstehenden Aufnahmezapfen (14) aufweist, von dem eine Spurstange (3) relativ zur Längsachse (L) gelenkig vorsteht, und die Manschette (5) einen flexiblen schlauchförmigen Faltenbalg (52) umfasst, der getriebeseitig einen ringförmigen, koaxial zu einer Flanschachse ausgebildeten Verbindungsflansch (51) und spurstangenseitig einen Dichtungsring (53) aufweist, umfassend die Schritte:

    - Bewegen des Verbindungsflansches (51) zum Einführen der Spurstange (3),
    - Annähern des Verbindungsflansches (51) an den Aufnahmezapfen (14), und
    - Aufstecken des Verbindungsflansches (51) auf den Aufnahmezapfen (14),
    - Greifen des Faltenbalgs (52) im Greifer (6) eines Robotermanipulators,
    - Bewegen des Greifers (6) zum Einführen der Spurstange (3) durch den Verbindungsflansch (51),
    - Neigen des Greifers (6) zum Neigen der Flanschachse (F) um einen vorgegebenen Neigungswinkel (a) relativ zur Längsachse (L),
    - Bewegen des Greifers (6) zum Annähern des Verbindungsflansches (51) an den Aufnahmezapfen (14),
    - Detektieren des Anschlags des Verbindungsflansches (51) am Aufnahmezapfen (14),
    - Bewegen des Greifers (6) zur Ausführung von taumelnden und/oder bogenförmigen und/oder translatorischen Montagebewegungen des Verbindungsflansches (51) relativ zur Längsachse (L),
    - kraftgeregeltes und/oder positionsgeregeltes Andrücken des Greifers (6) in Richtung der Längsachse (L) gegen den Aufnahmezapfen (14) zum Aufstecken des Verbindungsflansches (51) auf den Aufnahmezapfen (14) bis zum Erreichen einer vordefinierten Endposition des Verbindungsflansches (51) auf dem Aufnahmezapfen (14)
    - Lösen des Greifers (6) von der Manschette.

2. Verfahren nach Anspruch 1, **dadurch gekennzeichnet, dass** der Greifer (6) und/oder der Robotermanipulator kraft- und/oder positionsgeregelt bewegt wird.

3. Verfahren nach einem der vorangehenden Ansprüche, **dadurch gekennzeichnet, dass** der Greifer (6) die Manschette (5) zumindest abschnittweise formstützend umgreift.

4. Verfahren nach einem der vorangehenden Ansprüche, **dadurch gekennzeichnet, dass** beim Einführen der Spurstange (3) eine Suchbewegung quer zur Richtung der Einführung durchgeführt wird zum Einfädeln der Spurstange (3) in den Dichtungsring (53).

5. Verfahren nach einem der vorangehenden Ansprüche, **dadurch gekennzeichnet, dass** zum Detektieren des Anschlags des Verbindungsflansches (51) am Aufnahmezapfen (14) ein Kraftanstieg der auf den Greifer (6) wirkenden Kraft erfasst wird.

6. Verfahren nach einem der vorangehenden Ansprüche, **dadurch gekennzeichnet, dass** während der Montagebewegung in Abhängigkeit der in Richtung der Längsachse (L) auf den Greifer (6) wirkenden Kraft der Verbindungsflansch (51) auf den Aufnahmezapfen (14) aufgesteckt wird.

**7.** Verfahren nach einem der vorangehenden Ansprüche, **dadurch gekennzeichnet, dass** der Verbindungsflansch (51) und der Aufnahmezapfen (14) korrespondierende, formschlüssig ineinander greifende Sitzelemente (15) aufweisen.

**Claims**

**1.** Method for assembling a flexible sleeve (5) on a steering gear (1), wherein the steering gear (1) has a receptacle pin (14) which protrudes axially in the direction of a longitudinal axis (L) and from which a tie rod (3) protrudes in a manner to be articulated relative to the longitudinal axis (L), and the sleeve (5) comprises a flexible hose-shaped bellows (52) which towards the gear has an annular connecting flange (51) that is configured so as to be coaxial with a flange axis and towards the tie rod has an annular seal (53), comprising the following steps:

- moving the connecting flange (51) in order to introduce the tie rod (3),
- offering up the connecting flange (51) to the receptacle pin (14), and
- plug-fitting the connecting flange (51) on the receptacle pin (14),
- gripping the bellows (52) in the gripper (6) of a robotic manipulator,
- moving the gripper (6) in order to introduce the tie rod (3) through the connecting flange (51),
- inclining the gripper (6) in order to incline the flange axis (F) about a predefined inclination angle (a) relative to the longitudinal axis (L),
- moving the gripper (6) in order to offer up the connecting flange (51) to the receptacle pin (14),
- detecting the impact of the connecting flange (51) on the receptacle pin (14),
- moving the gripper (6) in order to carry out tumbling and/or arcuate and/or translatory assembling movements of the connecting flange (51) relative to the longitudinal axis (L),
- pressing the gripper (6) in a force-controlled and/or position-controlled manner in the direction of the longitudinal axis (L) against the receptacle pin (14), in order to plug-fit the connecting flange (51) on the receptacle pin (14), until a predefined terminal position of the connecting flange (51) on the receptacle pin (14) is reached,
- releasing the gripper (6) from the sleeve.

**2.** Method according to Claim 1, **characterized in that** the gripper (6) and/or the robotic manipulator are/is moved in a force-controlled and/or position-controlled manner.

**3.** Method according to one of the preceding claims, **characterized in that** the gripper (6) at least in portions encompasses the sleeve (5) in a shape-supporting manner.

**4.** Method according to one of the preceding claims, **characterized in that**, in order to thread the tie rod (3) into the annular seal (53), a searching movement transverse to the direction of introduction is carried out when introducing the tie rod (3).

**5.** Method according to one of the preceding claims, **characterized in that**, in order to detect the impact of the connecting flange (51) on the receptacle pin (14), an increase of force in the force acting on the gripper (6) is detected.

**6.** Method according to one of the preceding claims, **characterized in that** during the assembling movement the connecting flange (51) is plug-fitted on the receptacle pin (14) as a function of the force acting in the direction of the longitudinal axis (L) on the gripper (6).

**7.** Method according to one of the preceding claims, **characterized in that** the connecting flange (51) and the receptacle pin (14) have communicating seat elements (15) which mutually engage in a form-fitting manner.

**Revendications**

**1.** Procédé de montage d'un manchon flexible (5) sur un mécanisme de direction (1), le mécanisme de direction (1) présentant un tourillon de réception (14) faisant saillie axialement en direction d'un axe longitudinal (L) et duquel une barre d'accouplement (3) fait saillie de manière articulée par rapport à l'axe longitudinal (L), et le manchon (5) comprenant un soufflet tubulaire flexible (52) qui présente côté transmission une bride de raccordement (51) annulaire, réalisée coaxialement à un axe de bride, et qui présente côté barre d'accouplement une bague d'étanchéité (53),
comprenant les étapes consistant à :

- déplacer la bride de raccordement (51) pour introduire la barre d'accouplement (3),
- rapprocher la bride de raccordement (51) du tourillon de réception (14), et
- emmancher la bride de raccordement (51) sur le tourillon de réception (14),
- saisir le soufflet (52) dans le préhenseur (6) d'un manipulateur robotisé,

- déplacer le préhenseur (6) pour introduire la barre d'accouplement (3) à travers la bride de raccordement (51),

- incliner le préhenseur (6) pour incliner l'axe de bride (F) d'un angle d'inclinaison prédéfini (a) par rapport à l'axe longitudinal (L),

- déplacer le préhenseur (6) pour rapprocher la bride de raccordement (51) du tourillon de réception (14),

- détecter la venue en butée de la bride de raccordement (51) contre le tourillon de réception (14),

- déplacer le préhenseur (6) pour effectuer des mouvements de montage de nutation et/ou en forme d'arc et/ou de translation de la bride de raccordement (51) par rapport à l'axe longitudinal (L),

- presser le préhenseur (6) de manière régulée en force et/ou en position en direction de l'axe longitudinal (L) contre le tourillon de réception (14) pour emmancher la bride de raccordement (51) sur le tourillon de réception (14) jusqu'à atteindre une position d'extrémité prédéfinie de la bride de raccordement (51) sur le tourillon de réception (14),

- détacher le préhenseur (6) du manchon.

2. Procédé selon la revendication 1, **caractérisé en ce que** le préhenseur (6) et/ou le manipulateur robotisé est/sont déplacé(s) de manière régulée en force et/ou en position.

3. Procédé selon l'une quelconque des revendications précédentes, **caractérisé en ce que** le préhenseur (6) entoure le manchon (5) en soutenant la forme au moins par endroits.

4. Procédé selon l'une quelconque des revendications précédentes, **caractérisé en ce que** lors de l'introduction de la barre d'accouplement (3), un mouvement de recherche est effectué transversalement à la direction de l'introduction afin d'enfiler la barre d'accouplement (3) dans la bague d'étanchéité (53).

5. Procédé selon l'une quelconque des revendications précédentes, **caractérisé en ce qu'**une augmentation de force de la force agissant sur le préhenseur (6) est identifiée afin de détecter la venue en butée de la bride de raccordement (51) contre le tourillon de réception (14).

6. Procédé selon l'une quelconque des revendications précédentes, **caractérisé en ce que** pendant le mouvement de montage, la bride de raccordement (51) est emmanchée sur le tourillon de réception (14) en fonction de la force agissant sur le préhenseur (6) en direction de l'axe longitudinal (L).

7. Procédé selon l'une quelconque des revendications précédentes, **caractérisé en ce que** la bride de raccordement (51) et le tourillon de réception (14) présentent des éléments d'ajustage (15) correspondants qui viennent en prise par complémentarité de forme.

Fig. 1

Fig. 2

Fig. 3

**Fig. 4**

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005085027 A1
- DE 8807327 U1